# EUROPÄISCHE PATENTSCHRIFT

(11) **EP 1 198 482 B1**
(45) Veröffentlichungstag und Bekanntmachung des Hinweises auf die Patenterteilung: **01.03.2006**
(21) Anmeldenummer: 00949385.9
(22) Anmeldetag: 20.07.2000
(51) Int. Cl.: C08F 2/08, C08F 2/32, C08F 2/22

(54) **POLYREAKTIONEN IN NICHTWÄSSRIGEN MINIEMULSIONEN**
POLYREACTIONS IN NON-AQUEOUS MINIEMULSIONS
POLYREACTIONS EN MINI-EMULSIONS NON AQUEUSES

(30) Priorität: 22.07.1999 DE 19934517
(43) Veröffentlichungstag der Anmeldung: 24.04.2002
(73) Patentinhaber: Max-Planck-Gesellschaft zur Förderung der Wissenschaften e.V., 80539 München (DE)
(72) Erfinder: ANTONIETTI, Markus, D-14558 Bergholz-Rehbrücke (DE); LANDFESTER, Katharina, D-14482 Potsdam (DE); WILLERT, Mirjam, D-13589 Berlin (DE); TIARKS, Franca, D-14050 Berlin (DE); BECHTHOLD, Nina, D-14469 Potsdam (DE)
(74) Vertreter: Weiss, Wolfgang
(86) Internationale Anmeldenummer: PCT/EP2000/006952
(87) Internationale Veröffentlichungsnummer: WO 2001/007487

(56) Entgegenhaltungen:
- US-A- 4 521 317
- DATABASE INSPEC [Online] INSTITUTE OF ELECTRICAL ENGINEERS, STEVENAGE, GB; SCHUBERT K -V ET AL: "Polymerization in nonaqueous microemulsions" Database accession no. 5461638 XP002151029 & COLLOID & POLYMER SCIENCE, SEPT. 1996, DR. DIETRICH STEINKOPFF VERLAG, GERMANY, Bd. 274, Nr. 9, Seiten 875-883, ISSN: 0303-402X

## Beschreibung

Die Erfindung betrifft ein Verfahren zur Durchführung von Polyreaktionen in nichtwässrigen Miniemulsionen.

Die Miniemulsionspolymerisation ist ein neuartiges Verfahren der Heterophasenpolymerisation, welches den Einsatz der klassischen Emulsionspolymerisation erweitert. Miniemulsionen sind Dispersionen aus zwei miteinander im wesentlichen nicht mischbaren Phasen und gegebenenfalls einem oder mehreren oberflächenaktiven Tensiden, bei denen ungewöhnlich kleine Tröpfchengrößen realisiert werden. Bei Polymerisationsreaktionen in Miniemulisonen wird üblicherweise ein unpolares Monomer oder ein Gemisch von Monomeren und gegebenenfalls einem Cosurfactant in Wasser mit Hilfe eines Tensids unter Einsatz hoher Scherfelder zu Tröpfchen in der gewünschten Größenordnung dispergiert, die durch das zugesetzte Tensid kolloidal stabilisiert werden (Sudol und EI-Aasser, in : Emulsion Polymerization and Emulsion Polymers; Lovell, P.A; EI-Aasser, M.S., Hrsg., Chichester (1997), 699). Bei derartigen Miniemulsionen kann die Tröpfchengröße aufgrund von Kollisionen und Fusionen noch anwachsen.

Die deutsche Patentanmeldung 198 52 784.5-43 beschreibt die osmotische Stabilisierung von wässrigen Mini- und Mikroemulsionen durch Verwendung von wasserunlöslichen Verbindungen als emulsionsstabilisierender Komponente. Durch Zusatz der wasserunlöslichen Substanz zur Ölphase, die üblicherweise die disperse Phase der Emulsion ist, wird ein osmotischer Druck aufgebaut, der dem durch die Oberflächenspannung der Emulsionströpfchen aufgebauten Kapillar- oder Kelvin-Druck entgegenwirkt.

Dies hat zur Folge, daß eine Ostwald-Reifung der Emulsionströpfchen verzögert oder vermieden wird.

Nichtwässrige Dispersionen werden derzeit vornehmlich mit der inversen Fällungspolymerisation (Fengler und Reichert, Angew. Makromol. Chem. 225 (19951, 139), der inversen Suspensionspolymerisation (Lee und Hsu, J. Appl. Polym. Sci. 69 (1998), 229; Omidian et al., Polymer 40 (1999), 1753) bzw. der inversen Mikroemulsionspolymerisation (Bicak und Sherrington, Reactive Funct. Polym. 27 (1995), 155; Candau et al. J. Polym. Sci., Polym. Chem. Ed. 23 (1985), 193; Graillat et al., J. Polym. Sci., Polym. Chem. 24 (1986), 427; Barton et al., Angew. Makromol. Chem. 237 (1996) 99, Barton und Stillhammerova, Angew. Makromol. Chem. 237 (1996), 113) hergestellt. Dabei kommt es jedoch zu einer Änderung von Partikelgröße und Partikelzahl während der Polymerisation, d.h. der Stofftransport über die Wasserphase bestimmt die Kinetik und die Zusammensetzung der hergestellten Polymere und Polymerlatices.

Imhof und Pine (J. Colloid Interf. Sci. 192 (1997), 368) beschreiben die Erhöhung der Stabilität von nichtwässrigen Emulsionen durch Zugabe geringer Mengen eines wasserunlöslichen Öls. Die dort beschriebenen Emulsionen haben jedoch eine mittlere Teilchengröße von mehr als 1 *µ*m, so daß es sich nicht um Mikro- oder Miniemulsionen handelt.

Überraschenderweise wurde gefunden, daß sich Miniemulsionen auch in nichtwässrigen Dispersionsmedien gut formulieren lassen und dort zu wohl definierten und stabilen Polymerprodukten in Form von Latizes führen. Dabei wird z.B. ein polares Monomer wie Acrylsäure oder Hydroxyethylmetacrylat in ein unpolares Lösungsmittel, z.B. einen Kohlenwasserstoff wie Hexadecan oder Cyclohexan eingebracht und mit einem typischen oberflächenaktiven Tensid, das für inverse Systeme einen HLB-Wert von vorzugsweise kleiner als 7 hat, wie etwa Aerosol OT (Sulfobernsteinsäure-bis-2-ethylhexylester-Natriumsalz), Span®80 (Sorbitanmonooleat, Fa. Fluka) oder KLE3729 (Fa. Goldschmidt) stabilisiert. Darüber hinaus wird als osmotisch aktives Reagenz ein starkes Hydrophil eingesetzt wie etwa Wasser oder/und ein Salz, z.B. Salze der Monomere wie Natriumacrylat. Auf diese Weise werden osmotisch stabilierte Mikroemulsionen erhalten, aus denen durch Polymerisation inverse Dispersionen polarer Polymere entstehen, die direkt weiterverwendet werden können, aus denen das Polymer aber auch in einer im wesentlichen wasserfreien Form isoliert werden kann. Im Vergleich zur bekannten inversen Fällungspolymerisation hat das erfindungsgemäße Verfahren den Vorteil, daß die Partikelgröße der Dispersion einfacher eingestellt werden kann und daß bei einer Copolymerisation ein homogenerer Polymeraufbau bzw. eine einfach und homogen einstellbare Vernetzungsdichte erreicht werden können. Im Vergleich zur inversen Suspensionspolymerisation können deutlich kleinere Partikel hergestellt werden.

Auch polare organische Lösungsmittel wie Formamid, Dimethylacetamid oder Glykole können als Dispersionsmedien zur Herstellung von Miniemulsionen verwendet, in denen hydrophobe Substanzen, z.B. polymerisierbare Monomere, dispergiert werden können. Auch hier werden oberflächenaktive Tenside mit einem für O/W-Systeme bevorzugten HLB-Wert von größer als 7 wie etwa Natriumdodecylsulfat, und ein osmotisches Kontrollreagenz, in diesem Fall eine hydrophobe Substanz, verwendet. Auf diese Weise können auch wasserempfindliche Monomere in Dispersion polymerisiertwerden, z.B. Methacrylsäurechlorid, Ketimine, bzw. Isocyanat- und Epoxid-haltige Monomere. Die resultierenden funktionaten Polymerprodukte stellen wichtige Intermediate für die Synthese weiterer Polymerprodukte dar.

Als Endprodukte sind auch Partikel zugänglich, die aufgrund des Fehlens entsprechender stabiler Emulsionssysteme des Standes der Technik bisher nicht hergestellt werden konnten.

Ein erster Gegenstand der Erfindung ist somit ein Verfahren zur Durchführung von Polyreaktionen in nichtwässrigen Miniemulsionen, welches dadurch gekennzeichnet ist, daß man eine Emulsion von Edukten einer Polyreaktion in einem nichtwässrigen fluiden Dispergiermedium unter Verwendung eines Tensids und einer osmotisch stabilisierenden Komponente erzeugt und zur Reaktion bringt,
wobei die osmotisch stabilisierende Komponente in einer Menge von bis 10 Gew.-% bezogen auf das Gesamtgewicht der Emulsion zugesetzt wird, und wobei man
(a) eine Miniemulsion einer dispersen Phase von polaren Edukten in einer kontinuierlichen unpolaren organischen Phase bildet und als osmotisch stabilisierende Komponente hydrophile Substanzen, insbesondere Wasser oder/und Salze verwendet oder
(b) eine Miniemulsion einer dispersen Phase von unpolaren Edukten in einer kontinuierlichen polaren organischen Phase bildet und als osmotisch stabilisierende Komponente hydrophobe Substanzen verwendet,
wobei eine Dispersion von Partikeln des Produkts der Polyreaktion im Medium erhalten wird.

Polyreaktionen im Sinne der vorliegenden Erfindung sind Reaktionen, bei denen Monomere oder Gemische von Monomeren zu Polymeren umgesetzt werden. Ein Beispiel für Polyreaktionen sind Polymerisationen, d.h. ohne Abspaltung von Nebenprodukten stufenlos verlaufende Polyreaktionen z.B. die Herstellung von Acryl- oder/und Styrolpolymeren oder Copolymeren aus entsprechenden Monomeren oder Monomergemischen.

Ein weiteres Beispiel für Polyreaktionen sind Polyadditionsreaktionen, die ohne Abspaltung von Nebenprodukten in Stufen verlaufen, z.B. die Herstellung von Polyurethanen aus multifunktionellen Hydroxyverbindungen und multifunktionellen Isocyanaten, die Herstellung von Polyharnstoffen aus multifunktionellen Aminen und multifunktionellen Isocyanaten und die Herstellung von Polyepoxiden aus multifunktionellen Epoxiden und multifunktionellen Aminen, Thiolen oder/und Hydroxyverbindungen.

Zu den Polyreaktionen zählen auch Polykondensationsreaktionen, die in Stufen unter Abspaltung von Nebenprodukten ablaufen, beispielsweise Unipolykondensationen, die unter Beteiligung eines einzigen Monomeren ablaufen, z.B. einer Hydroxycarbonsäure oder einer Aminosäure oder bei denen zwei verschiedene Monomere beteiligt sind, z.B. die Herstellung von Polyamiden aus multifunktionellen Carbonsäuren und multifunktionellen Aminen oder die Herstellung von Polyestern aus multifunktionellen Carbonsäuren und multifunktionellen Hydroxyverbindungen. Ein weiteres Beispiel für Polykondensationsreaktionen sind Copolykondensationen, bei denen mehr als zwei verschiedene Monomere beteiligt sind. Auch andere Polymere können durch Polykondensation aus den entsprechenden Monomeren hergestellt werden, z.B. Polyimide, Polycarbonate, Aminoplaste, Phenoplaste, Polysulfide oder Harnstoffharze.

Die Miniemulsion, in der die Polyreaktion durchgeführt wird, kann durch Anwendung hoher Scherfelder, z.B. durch einen Ultraschallstab, einen Strahldispergator oder einen Mikrofluidizer hergestellt werden. Die Emulsionströpfchen liegen vorzugsweise in der Größenordnung von 20 bis 1000 nm, insbesondere von 30 bis 600 nm mittlerer Teilchendurchmesser. In einer Ausführungsform der Erfindung wird eine Miniemulsion einer dispersen Phase von polaren organischen Monomeren in einer kontinuierlichen unpolaren organischen Phase, die mit der polaren Phase im wesentlichen mischbar ist, gebildet. Bei dieser Ausführungsform verwendet man als osmotisch stabilisierende Komponenten hydrophile Substanzen, insbesondere Wasser oder/und Salze, auch Salze der polaren Monomere, z.B. Salze der Acrylsäure oder Methacrylsäure.

In einer weiteren Ausführungsform bildet man eine O/W-Miniemulsion einer dispersen Phase von unpolaren organischen Monomeren in einer kontinuierlichen polaren organischen Phase, wobei beide Phasen im wesentlichen nicht miteinander mischbar sind. In diesem Fall verwendet man als osmotisch stabilisierende Komponenten hydrophobe Substanzen, die sich mit der unpolaren Phase vermischen und eine Löslichkeit in der polaren Phase vorzugsweise von weniger als 5 x 10⁻⁵ g/l, besonders bevorzugt weniger als 5 x 10⁻⁶ g/l und am meisten bevorzugt weniger als 5 x 10⁻⁷ g/l bei Raumtemperatur aufweisen. Beispiele hierfür sind Kohlenwasserstoffe, insbesondere volatile, gegebenenfalls halogenierte Kohlenwasserstoffe, Silane, Organosilane, Siloxane, langkettige Ester, Öle wie Pflanzenöle, z.B. Olivenöl, hydrophobe Farbstoffmoleküle, verkappte Isocyanate sowie oligomere Polymerisations-, Polykondensations- und Polyadditionsprodukte.

Die osmotisch stabilisierenden Komponenten werden vorzugsweise in einer Menge von 0,1 bis 10 Gew.-% und besonders bevorzugt 0,5 bis 5 Gew.-% bezogen auf das Gesamtgewicht der Emulsion zugesetzt.

Darüber hinaus werden zur Stabilisierung der O/W-Emulsion oberflächenaktive Tenside wie etwa Natriumdodecylsulfat, Cetyltrimethylammoniumchlorid oder auch polymere Tenside, wie z.B. Blockcopolymere von Styrol und Ethylenoxid zugesetzt. Die Tensidmenge liegt vorzugsweise im Bereich von 0,1 bis 20 Gew.-%, vorzugsweise 0,2 bis 10 Gew.-%, besonders bevorzugt 0,5 bis 5 Gew.-% bezogen auf das Gesamtgewicht der Emulsion.

Die Tenside und osmotisch stabilisierenden Komponenten werden vorzugsweise so ausgewählt, daß sie mit dem resultierenden Produkt der Polyreaktion kompatibel sind. So können Substanzen verwendet werden, die eine hohe Volatiltät besitzen oder/und nützlicherweise bei einer evtl. Weiterverwendung der polymeren Dispersion zum Einsatz kommen, z.B. als Weichmacher, Farbstoff etc., so daß sie positiv zur Zielanwendung beitragen können. Durch Variation der Tenside oder/und der osmotisch stabilisierenden Komponenten bzw. deren Mengen im Reaktionsansatz kann die Teilchengröße der Emulsion sowie der resultierenden Polymerdispersion wunschgemäß eingestellt werden.

Die Polyreaktion der Miniemulsion kann auch auf bekannte Weise ausgelöst werden, z.B. durch Zugabe eines Katalysators beispielsweise eines Radikalstarters und durch Temperaturerhöhung. Vorzugsweise geht man dabei von einer kritisch stabilisierten und besonders bevorzugt von einer thermodynamisch stabilien Emulsion aus. Bei derart osmotisch stabilisierten Emulsionen können Dispersionen des Polyreaktionsprodukts erhalten werden, deren Teilchengrößen sich gegenüber der Eduktemulsion nicht auf unerwünschte Weise geändert hat. Die Teilchen des Polyreaktionsprodukts haben eine mittlere Größe von vorzugsweise 10 bis 1000 nm und besonders bevorzugt von 30 bis 600 nm.

Darüber hinaus eignet sich das erfindungsgemäße Verfahren auch zur Herstellung von mehrphasigen Nanohybridpartikeln, z.B. Partikeln, die Polyreaktionsprodukte und darin verkapselte inerte Feststoffpartikel, z.B. anorganische Materialien wie Metallkolloide, oxidische Partikel wie SiO₂, TiO₂, CaSO₄, CaCO₃, BaSO₄, Zeolithe, Eisenoxide, ZnO, CoO, CrO₂, ZrO₂, Fluor- und Hydroxyapatite und Feinruß, oder organische Materialien, wie kolloidale Farbstoffaggregate enthalten. Die Größe der Feststoffpartikel liegt im allgemeinen im Bereich von 0,5 bis 400 nm, vorzugsweise im Bereich von 1 bis 250 nm und besonders bevorzugt im Bereich von 10 nm bis 200 nm. Die Größe der Emulsionströpfchen wird der Größe der zu verkapselnden Feststoffpartikel angepaßt.

Bei Polyreaktionen in osmotisch stabilisierten nichtwässrigen Miniemulsionen kann eine effiziente Einbettung von Feststoffpartikeln in die Hülle von Polyreaktionsprodukten erreicht werden. Vorzugsweise werden mindestens 60%, besonders bevorzugt mindestens 80°%, noch stärker bevorzugt mindestens 90% und am meisten bevorzugt mindestens 95% der Feststoffpartikel eingebettet. Die durch Polyreaktion erhaltenen Dispersionen können homogen verfilmt werden, wobei die resultierenden Filme eine hohe mechanische Stabilität und Säureresistenz aufweisen. Aufgrund der homogenen Verkapselung können die resultierenden Nanohybridpartikel beispielsweise für Farben oder Beschichtungen mit einer hohen coloristischen Effizienz eingesetzt werden.

In einer Ausführungsform des Verfahrens wird eine Miniemulsion einer dispersen Phase eines unpolaren Edukts in einer kontinuierlichen polaren organischen Phase, z.B. Formamid, Dimethylformamid, Dimethyl-acetamid oder/und Dimethylsulfoxid gebildet. Die Polyreaktion wird anschließend durch Zugabe eines oder mehrerer weiterer Edukte über die kontinuierliche Phase oder/und in Form einer zweiten Miniemulsion gestartet.

In einer weiteren Ausführungsform der Erfindung bildet man eine wässrige oder nichtwässrige Miniemulsion einer dispersen Phase eines polaren Edukts in einer kontinuierlichen unpolaren organischen Phase, die mit der dispersen Phase im wesentlichen nicht mischbar ist. Die Polyreaktion kann auch hier durch Zugabe eines oder mehrerer weiterer Edukte über die kontinuierliche Phase oder/und in Form einer zweiten Miniemulsion gestartet werden.

Weiterhin soll die Erfindung durch die nachfolgenden Beispiele erläutert werden.

### Beispiel

### Beispiel 1

1 g Acrylsäure wurde mit 60 mg Wasser versetzt und zu einer Lösung aus 9 g Cyclohexan und 250 mg des Tensids KLE3729 (Goldschmidt AG) zugegeben. Nach Rühren der Mischung für 1 h bei höchster Magnetrührerstufe wurde sie mit Hilfe eines Ultraschallstabes (Branson Sonifier, W400 Digital, Amplitude von 70%) für 60 s miniemulgiert. Die Miniemulsion wurde auf 65°C aufgeheizt und die Polymerisation mit 50 mg Azobisisobutyronitril (AIBN) gestartet. Nach 12 h war ein vollständiger Umsatz erreicht.

Die Messung der Partikelgröße erfolgte unter Verwendung eines Nicomp-Particle Sizer (Modell 370, PSS, Santa Barabara, USA) bei einem festgelegten Streuwinkel von 90°. Die Molekulargewichte der Polymere wurden durch GPC-Analyse bestimmt, die mit einer P1000-Pumpe und einem UV1000 Detektor (Thermo Separation Products) bei einer Wellenlänge von 260 nm mit 5 µm 8x300 mm SDV Säulen mit 10⁶, 10⁵, bzw. 10³ Angström (Polymer Standard Service) in THF mit einer Fließrate von 1 ml/min bei 30°C durchgeführt wurde. Die Berechnung der Molekulargewichte erfolgte anhand einer Kalibrierung relativ zu den Standards.

Elektronenmikroskopische Aufnahmen wurden mit einem Zeiss 912 Omega Elektronenmikroskop bei 100 kV durchgeführt. Die verdünnten Partikeldispersionen wurden auf ein 400-Mesh-Kohlenstoff beschichtetes Kupfergrid aufgebracht und trocknen gelassen.

Die mittlere Teilchengröße der resultierenden Dispersion betrug ca. 50 nm.

### Beispiel 2

Gemäß der Vorschrift von Beispiel 1 wurde mit Diethylenglycoldiacrylat (DEGDA) versetzte Acrylsäure (Vernetzungsgrad 1:40) polymerisiert. Auch hier wurden stabile Partikel in Form von Hydrogelen erhalten.

Das Ergebnis dieses Versuchs ist in Tabelle 1 gezeigt.

### Beispiel 3

Statt Cyclohexan wurde Hexadecan als Dispersionmedium verwendet. Gemäß der in Beispiel 1 beschriebenen Vorschrift wurden Dispersionen hergestellt.

Das Ergebnis dieses Versuches ist in Tabelle 1 gezeigt.

### Beispiel 4

Die Tensidmenge in Beispiel 3 wurde variiert. Dabei konnten im Bereich von 2 bis 100 w% Tensid, bevorzugt 10 bis 50 w% Tensid stabile inverse Miniemulsionen formuliert werden. Die Angabe der Tensidmenge in "w%" bezieht sich dabei auf das Gewicht des Monomers bzw. des resultierenden Polymers.

Die Ergebnisse sind in Tabelle 1 gezeigt.

### Beispiel 5

Anstelle von KLE3927 wurden die Tenside Span 80, C₁₈E₁₀ und AOT verwendet. Auch hier konnten Polymerdispersionen erhalten werden.

### Beispiel 6

Statt Acrylsäure wurden andere hydrophile Monomere wie etwa Hydroxymethylmethacrylat (HEMA), Acrylamid und Isopropylacrylamid polymerisiert.
a) 3 g Hydroxymethylmethacrylat wurden mit 125 mg Wasser versetzt, zu einer Lösung aus 25 g Cyclohexan und 300 mg des Tensids KLE3729 gegeben und für 1 h bei höchster Magnetrührerstufe gerührt. Entsprechend der in Beispiel 1 beschriebenen Vorschrift wurde eine Miniemulsion hergestellt und reagieren gelassen. Die Teilchengröße der resultierenden Polymerdispersion betrug ca. 130 nm (siehe Tabelle 2).
b) 3 g Acrylamid oder Isopropylacrylamid wurden mit 4 g Wasser versetzt, zu einer Lösung aus 32 g Cyclohexan bzw. Hexan und 500 mg des Tensids KLE3729 gegeben und für 1 h bei höchster Magnetrührerstufe gerührt. Entsprechend der in Beispiel 1 beschriebenen Vorschrift wurde eine Miniemulsion hergestellt und reagieren gelassen. Die Teilchengröße der resultierenden Dispersion betrug ca. 90 nm (siehe Tabelle 2).

Auch nach Variation der Dispergiermedien, Tenside, Tensidmengen und des Initiators konnten Dispersionen erzeugt werden (siehe Tabelle 2).

### Beispiel 7

6 g Styrol und 250 mg Hexadecan (HD) wurden zu einer Lösung aus 24 ml Formamid und 72 mg Natriumdodecylsulfat gegeben und bei voller Magnetrührerstufe 1 h vermischt. Mit Hilfe eines Ultraschallstabes (1 min, Amplitude von 90%) wurde eine Miniemulsion hergestellt. Die Polymerisaton wurde bei 72°C unter Verwendung von 120 mg K₂S₂O₈ (KPS) als Initiator durchgeführt. Nach 6 h war die Reaktion beendet. Es wurden hochstabile Polymerdispersionen im organischen Medium Formamid erhalten.

Bei Erhöhung der Tensidmenge auf bis zu 500 mg wurde gefunden, daß die Partikelgröße durch die Tensidmenge eingestellt werden kann.

Auch bei Verwendung des nichtionischen Tensids Lutensol AT50 (Mengen 125-1000 mg) konnten stabile Polymerdispersionen mit Teilchengrößen zwischen 70 und 250 nm erzeugt werden.

Die Ergebnisse sind in Tabelle 3 gezeigt.

### Beispiel 8

Anstelle von Formamid wurde Glycol als Dispersionsmedium verwendet. Ansonsten wurde die in Beispiel 7 beschriebene Prozedur befolgt. Es wurden stabile Dispersionen erhalten, die eine deutliche größere Partikelgröße als die entsprechenden Formamid-Dispersionen aufweisen.

Die Ergebnisses sind in Tabelle 4 gezeigt.

### Beispiel 9

Als Monomere wurden hydrolyseempfindliche Substanzen wie z.B. Methacrylsäureglycylester gemäßder in Beispiel 7 beschriebenen Vorschrift polymerisiert.

### Beispiel 10

Gemäß der in Beispiel 7 beschriebenen Vorschrift wurde eine Polymerdispersion in Dimethylacetamid (DMA) hergestellt.

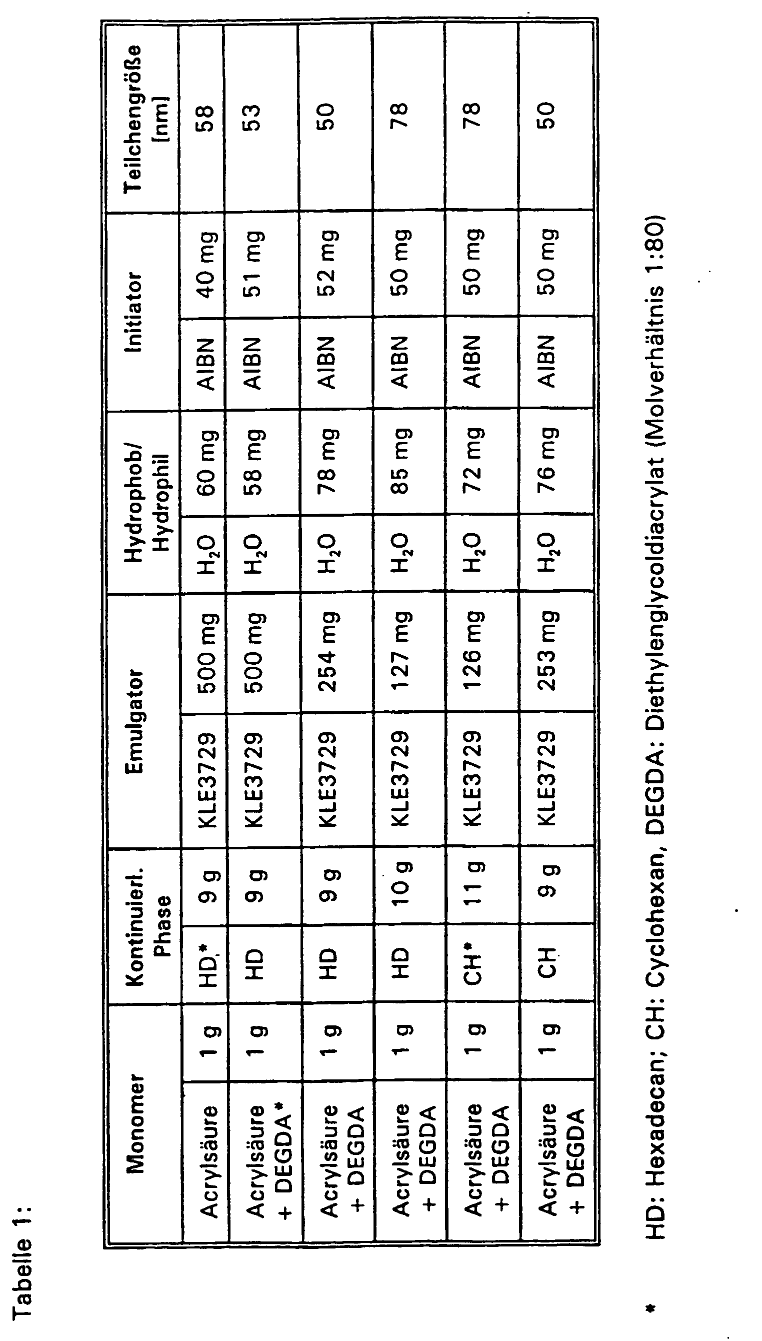

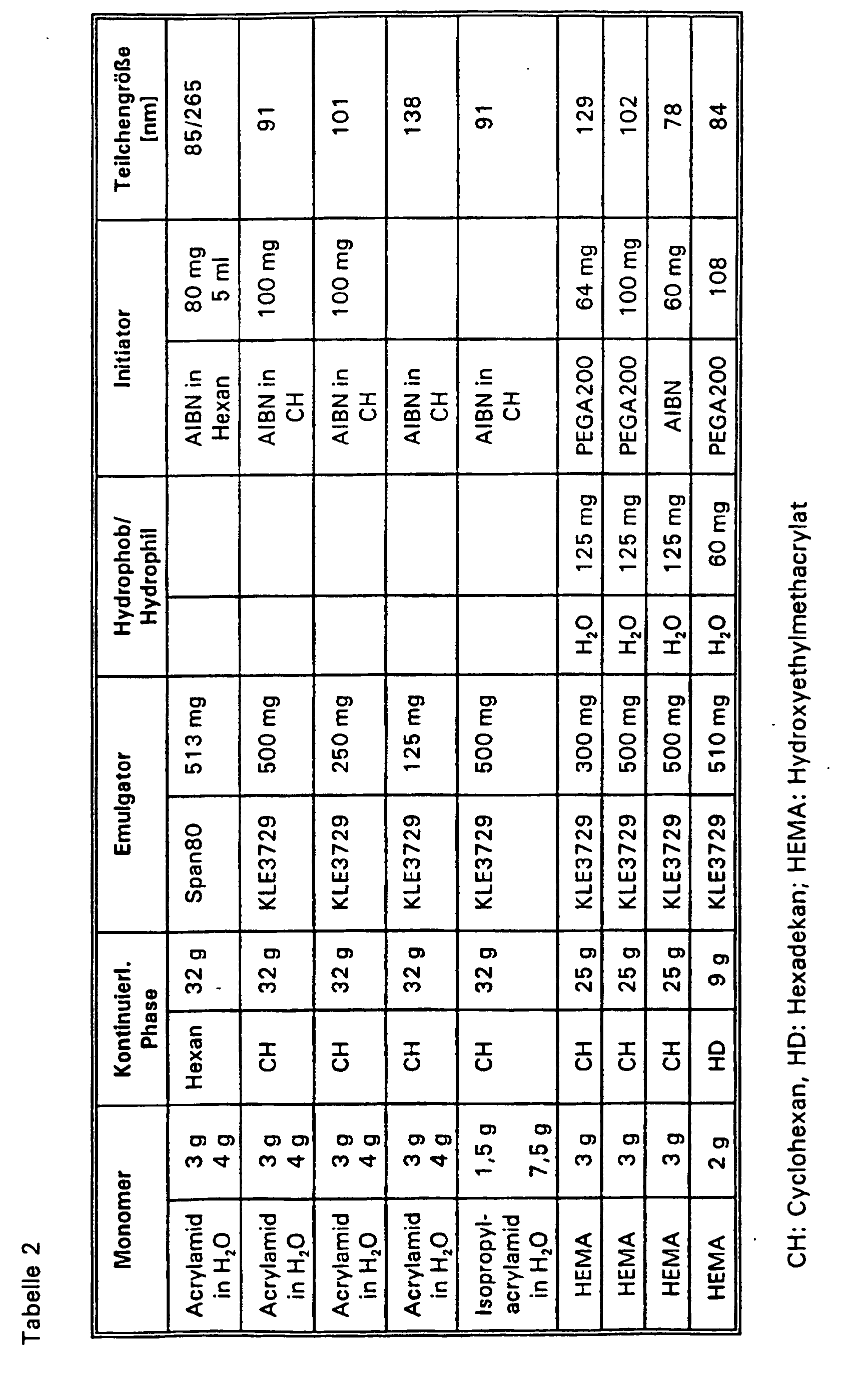

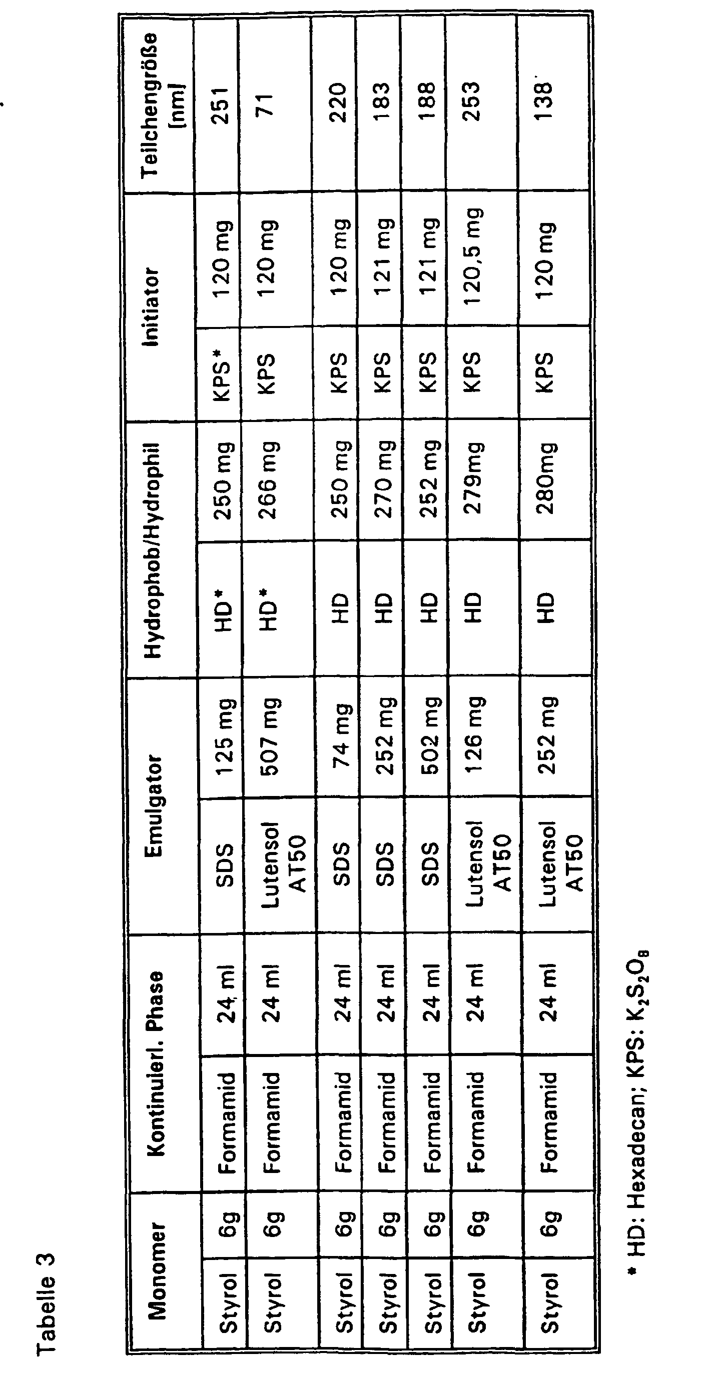

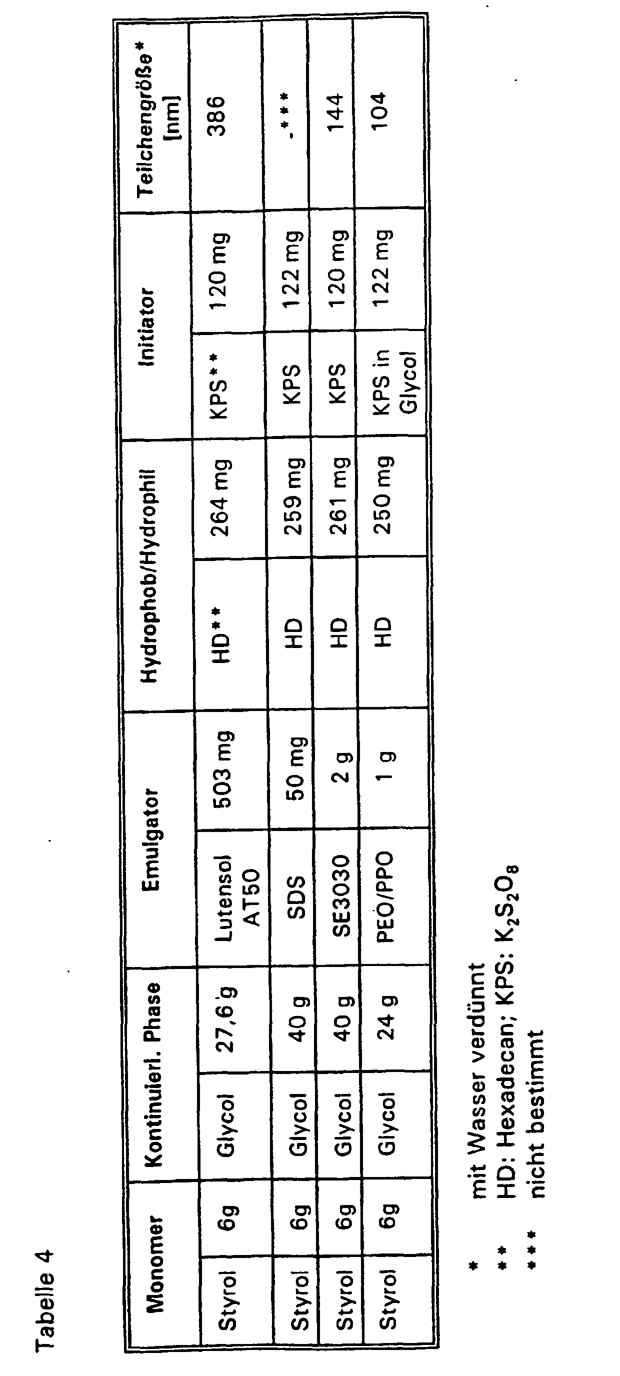

## Patentansprüche

1. Verfahren zur Durchführung von Polyreaktionen in nichtwässrigen Miniemulsionen,
**dadurch gekennzeichnet,**
**daß** man eine Miniemulsion von Edukten einer Polyreaktion in einem nichtwässrigen fluiden Dispergiermedium unter Verwendung eines Tensids und einer osmotisch stabilisierenden Komponente erzeugt und zur Reaktion bringt, wobei die osmotisch stabilisierende Komponente in einer Menge von bis 10 Gew.-% bezogen auf das Gesamtgewicht der Emulsion zugesetzt wird, und wobei man
(a) eine Miniemulsion einer dispersen Phase von polaren Edukten in einer kontinuierlichen unpolaren organischen Phase bildet und als osmotisch stabilisierende Komponente hydrophile Substanzen, insbesondere Wasser oder/und Salze verwendet oder
(b) eine Miniemulsion einer dispersen Phase von unpolaren Edukten in einer kontinuierlichen polaren organischen Phase bildet und als osmotisch stabilisierende Komponente hydrophobe Substanzen verwendet.

2. Verfahren nach Anspruch 1,
**dadurch gekennzeichnet,**
**daß** die Polyreaktion ausgewählt wird aus Polymerisationsreaktionen, Polyadditionreaktionen und Polykondensationsreaktionen.

3. Verfahren nach Anspruch 2,
**dadurch gekennzeichnet,**
**daß** die Polyreaktion eine Polymerisation von Acryl- oder/und Styrolmonomeren umfaßt.

4. Verfahren nach Anspruch 2,
**dadurch gekennzeichnet,**
**daß** die Polyreaktion eine Polyaddition von multifunktionellen Epoxiden mit Hydroxy-, Amino-oder/und Thiolverbindungen umfaßt.

5. Verfahren nach Anspruch 2,
**dadurch gekennzeichnet,**
**daß** die Polyreaktion eine Polyaddition von multifunktionellen Isocyanaten mit multifunktionellen Hydroxy- oder/und Aminoverbindungen umfaßt.

6. Verfahren nach Anspruch 2,
**dadurch gekennzeichnet,**
**daß** die Polyreaktion eine Polykondensation von multifunktionellen Carbonsäuren mit multifunktionellen Hydroxy- oder/und Aminoverbindungen umfaßt.

7. Verfahren nach einem der vorhergehenden Ansprüche,
**dadurch gekennzeichnet,**
**daß** die osmotisch stabilisierende Komponente in eine Menge von mindestens 0,1 Gew.-% bezogen auf das Gesamtgewicht der Emulsion zugesetzt wird.

8. Verfahren nach einem der vorhergehenden Ansprüche,
**dadurch gekennzeichnet,**
**daß** die mittlere Teilchengröße der Emulsion im Bereich von 30 bis 600 nm liegt.

9. Verfahren nach einem der vorhergehenden Ansprüche,
**dadurch gekennzeichnet,**
**daß** die Emulsion weiterhin darin dispergierte Feststoffpartikel enthält.

## Claims

1. Method of conducting polymerizations in nonaqueous miniemulsions,
**characterized in that**
a miniemulsion is produced from reactants of a polymerization in a nonaqueous fluid dispersing medium, using a surfactant and an osmotically stabilizing component, and is reacted, in which the osmotically stabilizing compound is added in an amount of up to 10% by weight based on the overall weight of the emulsion, and in which
(a) a miniemulsion is formed from a disperse phase of polar reactants in a continuous apolar organic phase, and hydrophilic substances, especially water and/or salts, are used as osmotically stabilizing component,
(b) a miniemulsion is formed from a disperse phase of apolar reactants in a continuous polar organic phase, and hydrophobic substances are used as osmotically stabilizing component.

2. Method according to Claim 1,
**characterized in that**
the polymerization is selected from addition polymerization reactions, polyaddition reactions, and polycondensation reactions.

3. Method according to Claim 2,
**characterized in that**
the polymerization comprises an addition polymerization of acrylic and/or styrene monomers.

4. The method according to Claim 2,
**characterized in that**
the polymerization comprises a polyaddition of polyfunctional epoxides with hydroxy, amino and/or thiol compounds.

5. Method according to Claim 2,
**characterized in that**
the polymerization comprises a polyaddition of polyfunctional isocyanates with polyfunctional hydroxy and/or amino compounds.

6. Method according to Claim 2,
**characterized in that**
the polymerization comprises a polycondensation of polyfunctional carboxylic acids with polyfunctional hydroxy and/or amino compounds.

7. Method according to any of the preceding claims,
**characterized in that**
the osmotically stabilizing component is added in an amount of at least 0.1% by weight based on the overall weight of the emulsion.

8. Method according to any of the preceding claims,
**characterized in that**
the average particle size of the emulsion is situated in the range from 30 to 600 nm.

9. The method according to any of the preceding claims,
**characterized in that**
the emulsion further comprises - dispersed therein - particulate solids.

## Revendications

1. Procédé de réalisation de polyréactions dans des miniémulsions non aqueuses
**caractérisé en ce qu'**
on produit une miniémulsion de réactifs d'une polyréaction dans un milieu de dispersion fluide non aqueux en utilisant un tensioactif et un composant de stabilisation osmotique et on la met en réaction, le composant de stabilisation osmotique étant ajouté dans une quantité pouvant aller jusqu'à 10 % en poids par rapport au poids total de l'émulsion et, dans lequel,
(a) on forme une miniémulsion d'une phase disperse de réactifs polaires dans une phase organique apolaire continue et on utilise, comme composant de stabilisation osmotique, des substances hydrophiles, en particulier de l'eau et/ou des sels ou
(b) on forme une miniémulsion d'une phase disperse de réactifs apolaires dans une phase organique polaire continue et on utilise, comme composant de stabilisation osmotique, des substances hydrophobes.

2. Procédé selon la revendication 1,
**caractérisé en ce qu'**
on choisit la polyréaction à partir de réactions de polymérisation, de réactions de polyaddition et de réactions de polycondensation.

3. Procédé selon la revendication 2,
**caractérisé en ce que**
la polyréaction comporte une polymérisation de monomères d'acryle et/ou de styrène.

4. Procédé selon la revendication 2,
**caractérisé en ce que**
la polyréaction comporte une polyaddition d'époxydes multifonctionnels comportant des composés hydroxy, amino et/ou thiol.

5. Procédé selon la revendication 2,
**caractérisé en ce que**
la polyréaction comporte une polyaddition d'isocyanates multifonctionnels comportant des composés hydroxy et/ou amino multifonctionnels.

6. Procédé selon la revendication 2,
**caractérisé en ce que**
la polyréaction comporte une polycondensation d'acides carboxyliques multifonctionnels comportant des composés hydroxy et/ou amino multifonctionnels.

7. Procédé selon l'une quelconque des revendications précédentes,
**caractérisé en ce qu'**
on ajoute le composant de stabilisation osmotique dans une quantité d'au moins 0,1 % en poids par rapport au poids total de l'émulsion.

8. Procédé selon l'une quelconque des revendications précédentes,
**caractérisé en ce que**
la granulométrie moyenne de l'émulsion est de l'ordre de 30 à 600 nm.

9. Procédé selon l'une quelconque des revendications précédentes,
**caractérisé en ce que**
l'émulsion contient en outre des particules solides dispersées à l'intérieur.
